# EUROPEAN PATENT APPLICATION

(11) **EP 2 028 799 A1**
(43) Date of publication of application: **25.02.2009**
(21) Application number: 07817112.1
(22) Date of filing: 18.10.2007
(51) Int. Cl.: H04L 12/56

(54) **A METHOD AND SYSTEM OF SERVICE FUNCTION SUPPLY**

(30) Priority: 25.12.2006 CN 200610168265
(71) Applicant: Huawei Technologies Co., Ltd., Shenzhen, Guangdong Province 518129 (CN); Chang, Heng, Shenzhen Guangdong 518129 (CN)
(72) Inventor: CHANG, Heng, Shenzhen Guangdong 518129 (CN); SHI, Xiaomin, Shenzhen Guangdong 518129 (CN); LI, Yan, Shenzhen Guangdong 518129 (CN); XU, Wenhua, Shenzhen Guangdong 518129 (CN)
(74) Representative: Thun, Clemens
(86) International application number: PCT/CN2007/070921
(87) International publication number: WO 2008/077324

(57) **Abstract**

A method for providing service functions includes: the service provider side receives a service request from the service requestor side, screens service functions requested by the service request and forms a service request result, and sends the service request result to the service provider side. A system for providing service functions includes: a service server on the service provider side, adapted to return the requested service to the service requestor side according to the service request of the service requestor side; a function screener, connected to the service server on the service provider side and adapted to screen service functions requested by the service request and send the after-screening result to the service server on the service provider side. With the present invention, it is possible to control and screen functions of a service dynamically in real time without affecting the network performance.

## Description

This application claims a priority from the Chinese Patent Application No. 200610168265.8, filed with the Chinese Patent Office on December 25, 2006 and entitled "System and Method for Providing Service Functions", the contents of which are incorporated herein by reference in their entirety.

### Field of the Invention

The present invention relates to communication technologies, and in particular, to a system and method for providing service functions.

### Background of the Invention

With the development of mobile communication and mobile network technologies, more and more services are entering people's life. As service needs are diversified and personalized, traditional development of large and complex services is always time consuming and the modifications are complicated, which no longer satisfies the needs. Under this condition, services are no longer unrelated to each other. Instead, more complicated services are provided via mutual calls between services. This leads to the need for frequent interactions between many functions of services. Due to the specifications formulated by the Open Service Access/Parly (OSA/Parly) and the efforts of the Open Mobile Alliance (OMA), many basic service functions are able to act as enablers to provide services externally. Meanwhile, with the robust development of WebServices (an application that provides an application programming interface (API) for external calls via Web), services can interact and access functions of each other conveniently via WebServices. One service usually provides many functions for other services to access. Different services are controlled in a way specific to the time, the status of the service provider, the service requestor and the type of the service requestor so as to screen service functions of the service provider and get the satisfactory service functions.

In the conventional art, there are two methods for screening service functions:

One is to restrict access to different functions of a service in the service implementation itself. For example, set a function to get system time in the service implementation and set a corresponding time table so as to achieve screening of a service function by modifying the external interface of the service function.

The other method is based on a gateway. Screening information is set in a gateway between interactive services (for example, restrict service requests sent from a certain network segment, or restrict service requests targeted at a certain network segment in the gateway), so that, when the service requestor requests a service of the service provider, all request information is first routed to the gateway for screen control.

In the process of implementing the present invention, however, the inventor finds weaknesses in these two methods. For the first method, because screening is realized in the service implementation, modifications are always hard when the service requirement changes and it is difficult to restrict service calls specific to characteristics of the service requestor, for example, to restrict access to services in a specific address or a specific protocol. For the second method, because a gateway needs to process all requests addressed to the service provider, the gateway needs to process not only the bearer of a request message but also the request message. For example, in the case of a Simple Object Access Protocol (SOAP) request over Hypertext Transfer Protocol (HTTP), the gateway needs to process not only the HTTP protocol but also the SOAP protocol. Furthermore, when the gateway supports protocols of the request message, a performance bottleneck may be easily caused, imposing a great impact on the network performance. In addition, the gateway cannot process a request encrypted at both ends. Moreover, these two screening methods use monotonic screening rules. The two methods are unable to screen different functions of a service in a differentiated manner and unable to set different screening rules according to different service needs.

### Summary of the Invention

Embodiments of the present invention provide a method and system for providing service functions so as to control and screen service functions in a simple and effective way.

For the purpose, embodiments of the invention provide the following technical solution:

A method for providing service functions includes:

by a service provider side, receiving a service request from a service requestor side;

screening service functions requested by the service request and forming a service request result; and

returning the service request result to the service requestor side.

A system for providing service functions includes: a service server located on a service provider side, adapted to return a service requested by a service requestor side according to a service request of the service requestor side; and further includes:

a function screener, connected to the service server on the service provider side and adapted to screen service functions requested by the service request and return an after-screening result to the service server on the service provider side.

As seen from the above technical solution provided by embodiments of the invention, the service provider side screens service functions requested by the service request of the service requestor side. The screening process is completed jointly by the service server and the function screener on the service provider side. Thus service functions requested by the service requestor side can be controlled conveniently and effectively. This control does not require a change in the implementation of a service itself and may control and screen functions of a service dynamically in real time without affecting the network performance.

### Brief Description of the Drawings

Figure 1 is a diagram showing a system for providing service functions according to an embodiment of the invention and its networking with devices on the service requestor side;

Figure 2 is diagram showing a system for providing service functions according to another embodiment of the invention and its networking with devices on the service requestor side;

Figure 3 is a flow chart showing the procedure of a method for providing service functions according to a first embodiment of the invention;

Figure 4 is a flow chart showing the procedure of a method for providing service functions according to a second embodiment of the invention;

Figure 5 is a flow chart showing the procedure of a method for providing service functions according to a third embodiment of the invention;

Figure 6 is a schematic diagram of a function screener in a system for providing service functions according to a first embodiment of the invention;

Figure 7 is a schematic diagram of a function screener in a system for providing service functions according to a second embodiment of the invention;

Figure 8 is a flow chart showing an internal interaction procedure in a function screener according to an embodiment of the invention; and

Figure 9 is a schematic diagram showing a process of providing service functions using the method in the first embodiment of the present invention.

### Detailed Description of the Invention

To help those skilled in the art better understand the technical solution of the present invention, the following describes the embodiments of the invention in detail with reference to the accompanying drawings.

Embodiments of the invention are based on the idea of controlling different services in a way specific to the time, the status of the service provider, the service requestor and the type of the service requestor so as to screen service functions of the service provider and control service functions requested by the service requestor.

Upon reception of a service request from a service requestor side, the service provider side does not provide all requested services for the requestor side without any analysis. Instead, the service provider side first screens the service functions requested by the service requestor side to screen service functions that should not be provided for the service requestor side. The service provider side forms a service request result and sends the service request result to the service requestor side. This means the service provider side provides service functions that conform to requirements for the service requestor side via the service request result.

In specific implementation, a function screener may be placed on the service provider side and the function screener works with a service server on the service provider side to screen the service functions requested by the service request.

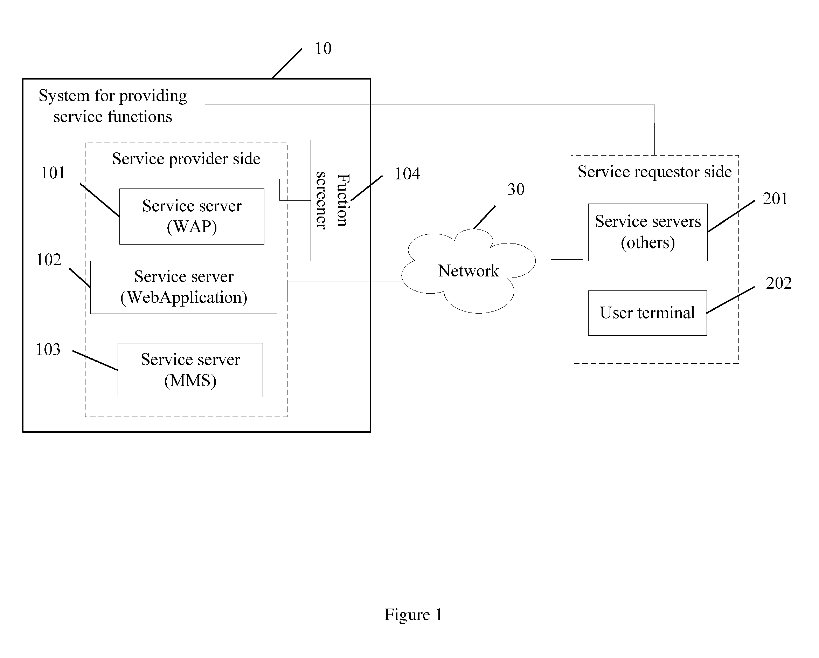

Figure 1 shows a system for providing service functions according to an embodiment of the invention and its networking with devices on the service requestor side.

A system 10 for providing service functions in the embodiment of the invention is placed on the service provider side and connected to the service requestor side devices via a network 30. The system 10 includes one or more service servers, and in this embodiment, the system 10 includes three as shown in Figure 1, a service server 101, a service server 102 and a service server 103. The service server 101 is a Wireless Application Protocol (WAP) server; the service server 102 is a Web application server; and the service server 103 is a multimedia messaging server (MMS). A service server on the service provider side receives from the service requestor side a service request, which may include the requested service information (ID), requested service function information (requested interface), and function specific input parameters. The service request may be sent by a service server 201 on the service requestor side or a user terminal 202 on the service requestor side. The service server on the service provider side returns the requested service to the service requestor side according to the service request.

The system 10 also includes a function screener 104 that is connected to the service servers on the service provider side, adapted to screen the service functions requested by the service request; that is, the function screener 104 makes a service server on the service requestor side unable to get some functions from a service server on the service provider side, and returns the after-screening result to the service server on the service provider side.

The service servers may register the screening information they need with the function screener 104 in advance. The function screener 104 screens the service functions requested by the service requestor side according to the screening information and formes a service request result. The screening information includes screening rules and registerer information, and may include the rule expiry time and other information that helps the system to make a screening judgment. For example, the screening information may include information listed in Table 1:

**Table 1**

| Service Address | Service Name | Expiry Time | Time Rule? | Screening Rule |
|---|---|---|---|---|
| http://Web | Service A | XXXX/XX/XX | No | Function =< operation name = "getName"> Method = disable |

Or, an existing service server may be extended to have the function screener as a functional unit of the service server so that the process of screening service functions requested by a service request is implemented within the service server on the service provider side. In this case, messages exchanged between the service server and the function screener on the service provider side are internal messages of the service server.

When the screening information registered in the function screener 104 by the service server does not satisfy the needs of screening, the function screener 104 may obtain related service information from a service registration server in the network. The service information may be information of services on the service requestor side or information of services on the service provider side; or may be information of other services. The function screener may decide to query for information of a particular service in the service directory according to the screening information and a message (request message, result message or analysis message) sent or forwarded by the service provider side.

For example, according to a screening rule, the second function of service A should be screened but the screening information does not provide interface information associated with the second function of the service. In this case, the function screener may query the service directory in the service registration server to obtain related information.

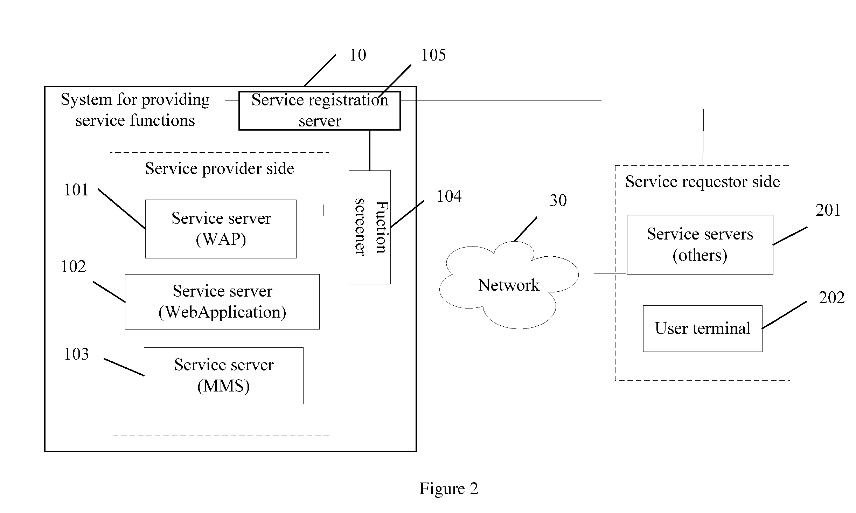

Or, a service registration server may be placed in the system. Figure 2 shows a system for providing service functions according to another embodiment of the invention and its networking with devices on the service requestor side.

Unlike the embodiment shown in Figure 1, the system 10 for providing service functions further includes a service registration server 105, adapted to store a service directory and provide service information for the function screener 104 via the service directory. The service directory may be obtained from a service registration server in the network; Or the service server on the service provider side and/or service server on the service requestor side register service information with the service registration server 105 and the service registration server 105 creates the service directory according to the registration information.

The following describes the method for providing service functions disclosed by the invention in detail on the basis of the networking structure of the foregoing system.

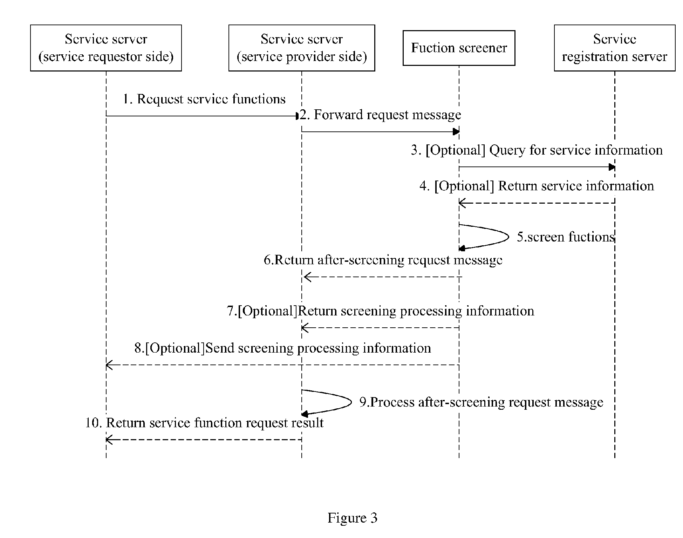

Figure 3 shows the procedure of a method for providing service functions according to a first embodiment of the invention, where a service server on the service provider side forwards a service request of the service requestor side to a function screen and the function screener screens requested functions that do not conform to requirements in the service request according to the pre-defined screening information and forms a new service request; then the service server on the service provider side processes the new service request to forma service function request result and returns the result to the service requestor side.

The procedure includes the following steps:

1. The service server on the service requestor side sends a request to the service server on the service provider side, requesting service functions. The request carries the requested service information (ID), and/or the requested service function information (requested interface), and/or function specific input parameters.

2. The service server on the service provider side forwards the received request to the function screener.

3. The function screener queries for service related information , for example, the service interface information, the service provider information, the service description information, etc. in a service registration server according to the services (on the service provider side or the service requestor side) in the service screening information registered in the function screener.

4. The service registration server returns the corresponding query result.

5. The function screener performs function screening on the request based on the screening information registered in the function screener to screen requested functions that do not conform to requirements and forms a new service function request.

6. The function screener returns the new service function request to the service server on the service provider side.

7. The function screener sends screening processing information (including whether modifications are made, and/or the screened function details, and/or error information) to the service server on the service provider side.

8. The function screener sends screening processing information (including whether modifications are made, and/or the screened function details, and/or error information) to the service server on the service requestor side.

9. The service server on the service provider side processes the new service function request returned by the function screener and forms a service function request result.

10. The service server on the service provider side returns the service function request result to the service server on the service requestor side.

The foregoing step 3 and step 4 are optional. The function screener queries the service registration server about related service information only when the screening information registered by the service server in the function screener does not satisfy the needs of screening.

The foregoing step 7 and step 8 are optional and may be carried out in a random sequence. The function screener may first send screening processing information to either the service server on the service provider side or the service server on the service requestor side. Alternatively, the function screener may only notify the service server on one side.

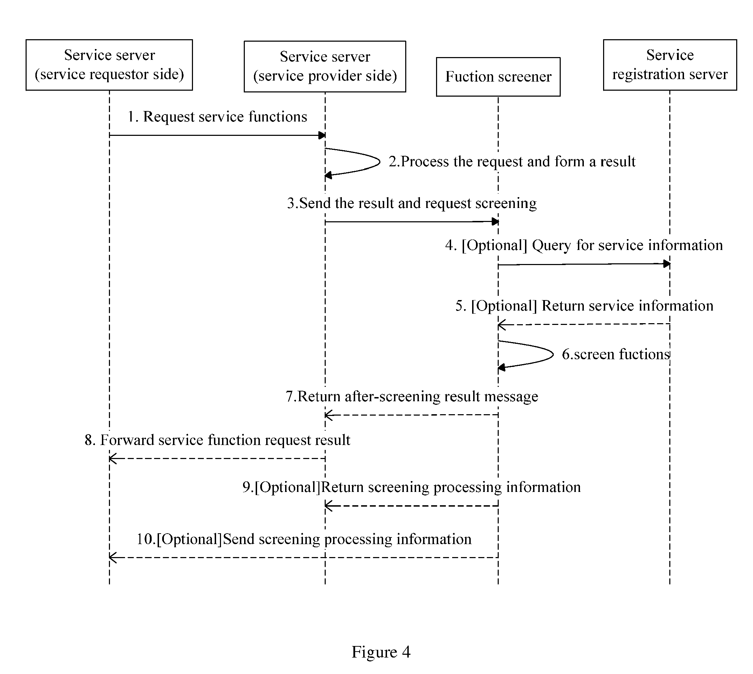

Figure 4 shows the procedure of a method for providing service functions according to a second embodiment of the invention, where a service server on the service provider side first processes a service request to form a processing result of all requested service functions, and then a function screener screens the result formed for functions that do not conform to requirements in the processing result of all requested service functions according to pre-defined screening information and sends the after-screening service function request result to the service server on the service provider side, and then the service server on the service provider side sends the after-screening service function request result to the service requestor. Alternatively, the function screen may send the after-screening service function request result to the service requestor directly.

The procedure includes the following steps:

1. The service server on the service requestor side sends a request to the service server on the service provider side, requesting service functions. The request carries the requested service information (ID), and/or the requested service function information (requested interface), and/or function specific input parameters.

2. The service server on the service provider side processes the service request and forms a function request result.

3. The service server on the service provider side forwards the result to the function screen.

4. The function screener queries for service related information (including the service interface information, the service provider information, the service description information, etc.) in a service registration server according to the services (on the service provider side or the service requestor side) in the service screening information registered in the function screener.

5. The service registration server returns the corresponding query result.

6. The function screener judges whether the received request result conforms to requirements and performs function screening based on screening information registered in the function screener to screen result information formed for functions not conforming to the requirements, and forms a new service function request result.

7. The function screener returns the new service function request result to the service server on the service requestor side.

8. The service server on the service provider side forwards the service function request result to the service server on the service requestor side.

9. The function screener sends screening processing information (including whether modifications are made, and/or the screened function details, and/or error information) to the service server on the service provider side.

10. The function screener sends screening processing information (including whether modifications are made, and/or the screened function details, and/or error information) to the service server on the service requestor side.

The foregoing step 4 and step 5 are optional. The function screener queries the service registration server about related service information only when the screening information registered by the service server in the function screener does not satisfy the needs of screening.

The foregoing step 9 and step 10 are optional and may be carried out in a random sequence. The function screener may first send screening processing information to either the service server on the service provider side or the service server on the service requestor side. Alternatively, the function screener may only notify the service server on one side.

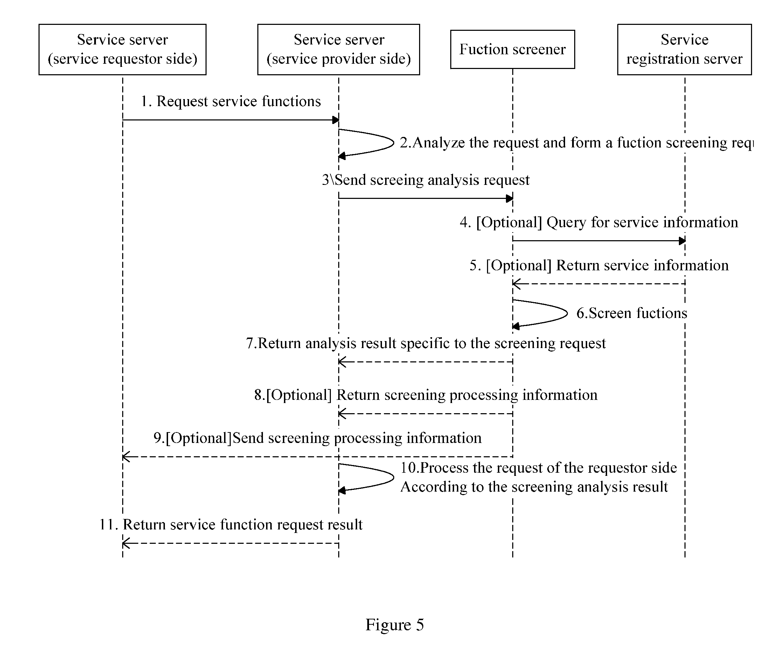

Figure 5 shows the procedure of a method for providing service functions according to a third embodiment of the invention, where a service server on the service provider side forms a screening analysis request according to a service request of the service requestor side; then a function screener analyzes whether calls for service functions in the request conform to requirements according to pre-defined screening information and returns a screening analysis result to the service server on the service provider side; the service server on the service provider side processes the service request according to the screening analysis result to form a service function request result and returns the result to the service server on the service requestor side.

The procedure includes the following steps:

1. The service server on the service requestor side sends a request to the service server on the service provider side, requesting service functions. The request carries the requested service information (ID), and/or the requested service function information (requested interface), and/or function specific input parameters.

2. The service server on the service provider side analyses the service function request and forms a related screening analysis request.

3. The service server on the service provider side sends the screening analysis request to the function screener.

4. The function screener queries for service related information (including the service interface information, the service provider information, the service description information, etc.) in a service registration server according to the services (on the service provider side or the service requestor side) in the service screening information registered in the function screener.

5. The service registration server returns the corresponding query result.

6. The function screener judges whether calls for service functions in the request conform to requirements according to the screening information registered in the function screener and forms an analysis result.

7. The function screener returns the analysis result to the service server on the service provider side.

8. The function screener sends screening processing information (including whether modifications are made, and/or the screened function details, and/or error information) to the service server on the service provider side.

9. The function screener sends screening processing information (including whether modifications are made, and/or the screened function details, and/or error information) to the service server on the service requestor side.

10. The service server on the service provider side processes the original service function request sent by the service requestor side according to the analysis result, and formes a result.

11. The service server on the service provider side sends the service function request result to the service server on the service requestor side.

Similarly, the forgoing step 4 and step 5 are optional. The function screen queries the service registration server about related service information only when the screening information registered by the service server in the function screen does not satisfy the needs of screening, for example, when the screening information in the function screener does not include information service in a screening rule. For example, a screening rule specifies: when a third-party service XXX and a service on the service provider side belong to one operator, function A of the service on the service provider side is disabled. The function screener needs to query the service registration server about operator information of the third-party service XXX and the service on the service provider side.

The foregoing step 8 and step 9 are optional and may be carried out in a random sequence. The function screener may first send screening processing information to either the service server on the service provider side or the service server on the service requestor side. Alternatively, the function screener may only notify the service server on one side.

In the procedures shown in Figures 3-5, the function screener needs to perform function screening or make a screening judgment on the message sent by the service server on the service provider side according to pre-defined screening information (registered in the function screener), which includes screening rules and registerer information and may further include the rule expiry time.

The foregoing embodiments show that, by placing a function screener on the service provider side, the present invention can effectively control and screen service functions without affecting the network performance.

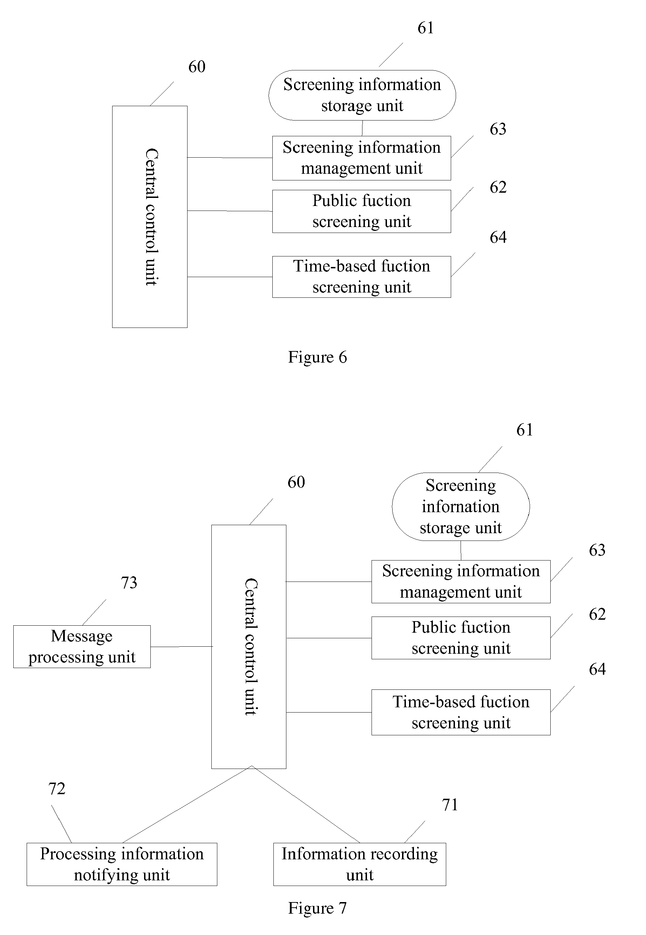

Figure 6 shows the schematic diagram of a function screener in a system for providing service functions according to a first embodiment of the invention.

As show in Figure 6, a function screener includes a central control unit 60, a screening information storage unit 61, and a public function screening unit 62. The central control unit 60 is adapted to control work of other functional units in the function screener according to a message received by the function screener; the screening information storage unit 61 is adapted to store screening information; the public function screening unit 62 is adapted to screen or judge the message received by the function screener according to an instruction of the central control unit 60 and the screening information and return a screening or judgment result to the central control unit 60.

The public function screening unit may have different processing modes according to the different content of the message for which the service server on the service provider side requests screening. For example, any of the following modes may be adopted:

(1) When the function screener receives a service request message forwarded by the service server on the service provider side, the public function unit 62 screens functions request that do not conform to requirements in the service request according to the screening information.

(2) When the function screener receives a processing result message that includes all requested service functions sent by the service server on the service provider side, the public function screening unit 62 screens the result formed for functions that do not conform to requirements in the processing result according to the screening information.

(3) When the function screener receives a screening analysis request message sent by the service server on the service provider side and formed according to the service request sent by the service requestor side, the public function screening unit 62 judges whether calls for service functions in the screening analysis request message conform to requirements according to the screening information.

After processing in any of the above modes, the public function screening unit 62 needs to send the processing result to the central control unit 60. Then the function screener carries out processing accordingly to form a service function request result and returns the result to the service requestor side, or the function screener sends the after-screening service function request result to the service requestor side directly.

To make it convenient to modify screening information required in different application environments, a screening information management unit 63 may be set, adapted to register the screening information provided by the service server on the service provider side into the screening information storage unit 61 and manage the screening information stored in the screening information storage unit 61, for example, modifying, deleting or adding screening information.

The screening information includes screening rules and registerer information and may further include rule expiry time to control the provision of service functions at different points or periods of time. Therefore, the function screener may further include a time-based function screening unit 64, adapted to screen a message received by the function screener according to an instruction of the central control unit 60 and the rule expiry time in the screening information and return the screening result to the central control unit 60.

Figure 7 shows the schematic diagram of a function screener in a system for providing service functions according to a second embodiment of the invention.

Unlike the embodiment shown in Figure 6, in this embodiment, the function screener further includes an information recording unit 71 and a processing information notifying unit 72. The information recording unit 71 is adapted to record processing information for screening of the received message by the function screen. The screening processing information includes: whether modifications are made, and/or information of screened functions, and/or error information. The processing information notifying unit 72 is adapted to send the screening processing information to the service provider side and/or the service requestor side.

In addition, in this embodiment of the invention, the function screener further includes a message processing unit 73, adapted to check whether the format of the message received by the function screener conforms to requirements and send the message format that conforms to the requirements to the central control unit 60. For example, the message received by the function screener is a SOAP-enveloped function request forwarded by the service server on the service provider side while the system does not support this protocol format. In this case, the function screener may notify the service server on the service provider side that the request cannot be processed.

The foregoing functional units are optional depending on the application requirement of the system.

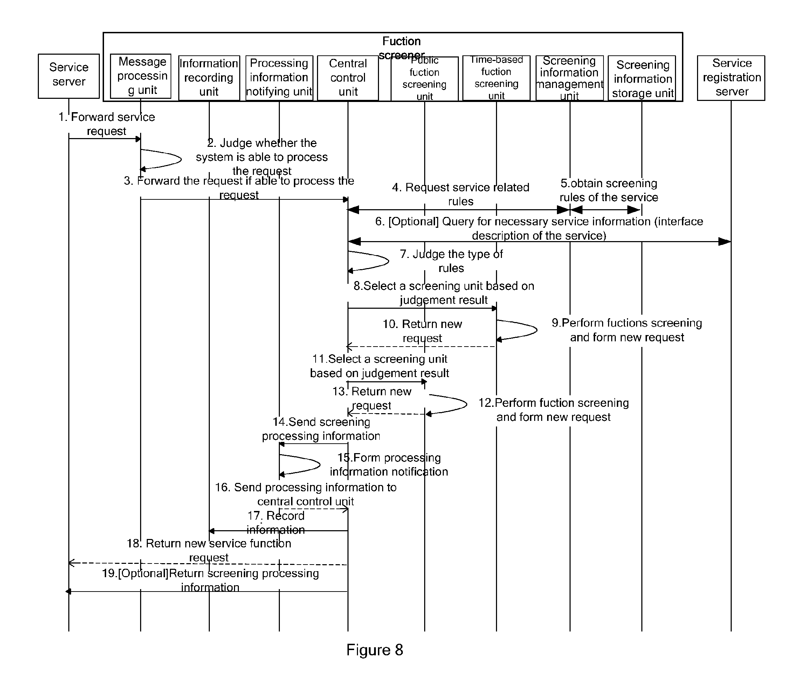

Figure 8 shows an internal interaction procedure of the function screener. The procedure includes the following steps:

1. The service server on the service provider side forwards a service request to the message processing unit.

2. The message processing unit judges whether the service request can be processed by the system (for example, whether the format of the message is identifiable).

3. If the request can be processed, the message processing unit forwards the request to the central control unit.

4. The central control unit calls the screening information management unit to query for the related service screening information.

5. The screening information management unit queries the screening information storage unit about screening information of the service.

6. If necessary, the central control unit queries the service registration server about required information of the service (including interface information of the service). This step is optional.

(a) The time to query for information of the service may be: (1) upon reception of a service request forwarded by the message processing unit, the central control unit queries the service registration server immediately according to information of the initiator (a service on the service requestor side) and the receiver (a service on the service provider side) of the request; (2) when a screening unit does not have related service information in a screening rule upon judging screening information, the screening unit initiates a request to the central control unit to get the related service information and then the central control unit queries the service registration server. For example, a screening rule specifies: when a third-party service XXX and a service on the service provider side belong to one operator, function A of the service on the service provider side is disabled. Then the screening unit needs to query the service registration server about operator information of the third-party service XXX and the service on the service provider side via the central control unit.

(b) The queries about what services from what information may be decided in two modes: (1) from a forwarded service request, to get information of the initiator (a service on the service requestor side) and the receiver (a service on the service provider side) of the request. For example, a screening rule specifies: when a certain category of the service on the service requestor side is BBB, function A of the service on the service provider side is disabled. Then, it is necessary to get information of the service on the service requestor side in the forwarded service request and query the service registration server for the service information. (2) from screening information, to get the registerer of the screening information and the service related to the screening rule. For example, a screening rule specifies: when a third-party service XXX and a service on the service provider side belong to one operator, function A of the service on the service provider side is disabled. Then the screening unit needs to query the service registration server about operator information of the third-party service XXX and the service on the service provider side via the central control unit.

7. The central control unit judges the type of the screening rules.

8. The central control unit selects an appropriate screening unit based on the judgment result (here the time-based screening unit is taken for example).

9. The time-based screening unit performs screening according to the screening rule to screen requested functions that do not conform to the screening rule and forms a new service request (the time-based function screening unit may maintain an internal timer unit to get time information so as to help process the time screening rule).

10. The time-based function screening unit returns the service request to the central control unit.

11. The central control unit continues judging the type of the remaining screening rules and selects an appropriate screening unit based on the judgment result (here a public function screening unit is taken for example).

12. The public function screening unit performs screening according to the screening rule to screen requested functions that do not conform to the screening rule and formes a new service request.

13. The public function screening unit returns the service request to the central control unit.

14. The central control unit sends screening processing information to the processing information notifying unit.

15. The processing information notifying unit forms a processing information notification.

16. The processing information notifying unit sends the processing information notification to the central control unit.

17. The central control unit sends information, for example , the log, etc. to the information recording unit for recording information.

18. The central control unit sends the new service request to the service server on the service provider side.

19. The central control unit sends the processing information notification to the service server (may send to both the service server on the service provider side and the service server on the service requestor side). This step is optional.

The following describes the process of providing service functions according to the method provided in the first embodiment of the invention shown in Figure 3.

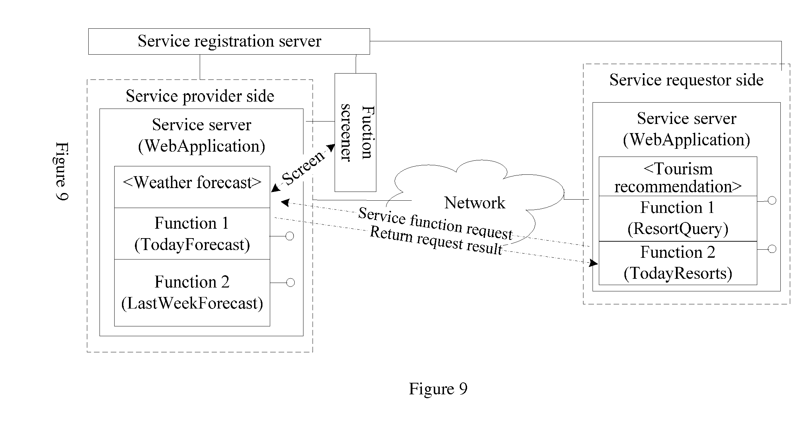

Figure 9 shows the process of providing service functions according to the method provided in the first embodiment of the present invention.

A tourism recommendation service runs on the service server on the service requestor side. This service has two functions: function 1 is ResortQuery, which outputs an introductory description of a resort when the resort name is input; function 2 is TodayResorts, which outputs resorts suitable for a travel for pleasure on the current day with a null input. The function calls a weather forecast service running on the service server on the service provider side via SOAP messages. The weather forecast service has two functions: function 1 is TodayForecast, which outputs weather forecast information of the current day with a null input; function 2 is LastWeekForecast, which outputs weather forecast information of the last week with a null input.

1. Function screening registration process

The weather forecast service registers a time screening rule of the service with the function screener. The rule is described in Table 2.

**Table 2**

| Service Address | Service Name | Time Rule? | Screening Rule |
|---|---|---|---|
| http://Weatherforecast | Weather forecast | Yes | TimeRange = (18:00-24:00); Function = < operation name = "getTodayForecast"> Method = disable |

Taking the Web Services Definition Language (WSDL) format for example, the description file of the weather forecast service is as follows:

```
...
         <portType name=" TodayForecast">
             <operation name="getTodayForecast">
                  <output message=" TodayForecast"/>
             </operation>
         </portType>
         <portType name=" LastWeekForecast">
             <operation name="getLastWeekForecast">
                  <output message=" LastWeekForecast"/>
             </operation>
         </portType>
...
```

The service provides service via the two operations in the two PortTypes.

2. Function screening process

The entire service screening process is as follows:

(1) The tourism recommendation service on the service server on the service requestor side sends a request (in the SOAP format) to the weather forecast service on the service server on the service provider side at 19:00, requesting function 1, TodayForecast, and function 2, LastWeekForecast, of the service.

Taking SOAP for example, the request sent by the tourism recommendation service on the service server on the service requestor side to the weather forecast service on the service server on the service provider side is as follows:

```
 <env:Envelope xmlns:env="http://www.w3.org/2001/12/soap-envelope">
         <env:Header>
            ...
      </env:Header>
         <env:Body>
             < getTodayForecast >
             ...
             </ getTodayForecast >
             <getLastWeekForecast >
             ...
         </ getLastWeekForecast >
...
         </env:Body>
 </env:Envelope>
```

(2) The service server on the service provider side forwards the received request to the function screener.

(3) The function screener performs function screening on the request based on the screening information registered in the function screener to screen requested functions that do not conform to requirements and forms a new service function request.

The internal processing of the function screener is as follows:

a. The message processing unit determines that the request is in the SOAP format which the system is able to process and forwards the request to the central control unit.

b. The central control unit calls the screening information management unit to query the screening information storage unit to get the screening rule of the weather forecast service.

c. The central control unit calls the time-based function screening unit according to the setting of the screening rule (time rule) and sends the original function request to the time-based function screening unit for screening processing.

d. The time-based function screening unit gets the current time as 19:00.

e. The time-based function screening unit determines that the "TimeRange = (18:00-24:00)" condition in the rule is met and continues with the screening to remove the "getTodayForecast" request in the original request according to the requirement in the screening rule (Function =< operation name = "getTodayForecast">Method = disable).

f. The time-based function screening unit forms a new service function request according to the screening result.

The new service function request is as follows (SOAP format):

```
             <env:Envelope
 xmlns:env="http://www.w3.org/2001/12/soap-envelope">
             <env:Header>
             ...
         </env:Header>
 <env:Body>
         <getLastWeekForecast >
             ...
         </ getLastWeekForecast >
         ...
         </env:Body>
 </env:Envelope>
```

g. The time-based function screening unit sends after-screening information (without the getTodayForecast request and other information) to the central control unit.

h. The central control unit calls the processing information notifying unit to form a screening notification and calls the information recoding unit to record log information.

3. In the foregoing processing inside the function screener, because the screening information registered in the function screener is sufficient for judging what service functions requested by the service server on the service requestor side need be screened, in this embodiment of the invention, it is unnecessary for the function screener to request related service information from the service registration server; otherwise, the function screener also needs to get related service information required in the screening rule from the service registration server.

4. The function screener returns the new after-screening service function request for the weather forecast service to the service server on the service provider side.

5. The function screener sends screening processing information (including whether modifications are made, and/or the screened function details, and/or error information) to the weather forecast service on the service server on the service provider side.

6. The function screener sends screening processing information (including whether modifications are made, and/or the screened function details, and/or error information) to the tourism recommendation service on the service server on the service requestor side.

7. The weather forecast service on the service server on the service provider side processes the new service request returned by the function screener and forms a service function request result.

8. The service server on the service provider side sends the service function request result to the service server on the service requestor side. Because the screening is successful, the returned result includes only the request result for the LastWeekForecast function. The request for the TodayForecast function is screened.

Although the invention has been described through exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. A method for providing service functions, comprising:
receiving, by a service provider side, a service request from a service requestor side;
screening service functions requested by the service request and forming a service request result; and
returning the service request result to the service requestor side.

2. The method of claim 1, wherein:
a function screener is set to work with a service server on the service provider side to screen the service functions requested by the service request.

3. The method of claim 2, wherein the process of screening service functions requested by the service request and forming a service request result comprises:
forwarding, by the service server on the service provider side, the service request to the function screen;
performing, by the function screener, screening service functions requested by the service request and forming a new service request; and
processing ,by the service server on the service provider side, the new service request and forming the service request result.

4. The method of claim 3, wherein the process of performing screening service functions requested by the service request and forming a new service request comprises:
screening, by the function screener, invalid service function in the service request according to pre-defined screening information and forming a new service request.

5. The method of claim 2, wherein the process of screening service functions requested by the service request and forming a service request result comprises:
processing, by the service server on the service provider side, the new service request and forming a processing result that covers all requested service functions; and
screening, by the function screener, the processing result that covers all requested service functions and forming the service request result.

6. The method of claim 5, wherein the process of screening the processing result that covers all requested service functions and forming the service request result comprises:
screening, by the function screener, a result formed for functions that do not conform to requirements in the processing result that covers all requested service functions according to pre-defined screening information and forming the service request result.

7. The method of claim 2, wherein the process of screening service functions requested by the service request and forming a service request result comprises:
forming, by the service server on the service provider side, a screening analysis request according to the service request;
judging, by the function screener, whether calls for service functions in the screening analysis request conform to requirements and returning a screening analysis result to the service server on the service provider side; and
by the service server on the service provider side, processing the service request according to the screening analysis result and forming the service request result.

8. The method of claim 7, wherein the process of judging whether calls for service functions in the screening analysis request conform to requirements comprises:
judging, by the function screener, calls for service functions in the screening analysis request according to pre-defined screening information.

9. The method of claim 3, 5, or 7, further comprising:
sending, by the function screener, screening processing information to the service server on the service provider side and/or the service requestor side, where the screening processing information comprises: whether modifications are made, and/or screened functions information , and/or error information.

10. The method of claim 4, 6, or 8, wherein:
the screening information comprises: screening rules, registerer information and rule expiry time.

11. The method of claim 2, further comprising:
obtaining, by the function screener, service information necessary for service function screening by querying a service directory in a network.

12. The method of claim 1, wherein the service request of the service requestor side comprises at least one type of information:
information of the requested service, information of requested service functions, and function specific input parameters.

13. A system for providing service functions, comprising: a service server on a service provider side, adapted to return a service requested by a service requestor side according to a service request of the service requestor side; and further comprising:
a function screener, connected to the service server on the service provider side and adapted to screen service functions requested by the service request and return an after-screening result to the service server on the service provider side.

14. The system of claim 13, wherein the function screener comprises: a central control unit, a screening information storage unit and a public function screening unit, wherein:
the central control unit is adapted to control work of the public screening unit according to a message received by the function screener;
the screening information storage unit is adapted to store screening information, which comprises filtering rules, registerer information and rule expiry time; and
the public function screening unit is adapted to perform screening or judgment on the message received by the function screener according to an instruction of the central control unit and the screening information and return a screening or judgment result to the central control unit.

15. The system of claim 14, wherein the function screener further comprises:
a screening information management unit, adapted to register screening information provided by the service server on the service provider side into the screening information storage unit and manage screening information stored in the screening information storage unit.

16. The system of claim 14, wherein the message received by the function screener is a service request message forwarded by the service server on the service provider side and the public function screening unit screens requested functions that do not conform to requirements in the service request according to the screening information.

17. The system of claim 14, wherein the message received by the function screener is a processing result message covering all requested service functions sent by the service server on the service provider side, and the public function screening unit screens a result generated for functions that do not conform to requirements in the processing result according to the screening information.

18. The system of claim 14, wherein the message received by the function screener is a screening analysis request message sent by the service server on the service provider side and generated according to the service request, and the public screening unit judges whether calls for service functions in the screening analysis request message conform to requirements according to the screening information.

19. The system of claim 14, wherein the function screen further comprises:
a time-based function screening unit, adapted to perform screening on the message received by the function screener according to an instruction of the central control unit and rule expiry information in the screening information and return a screening result to the central control unit.

20. The system of any of claims 14-19, wherein the function screener further comprises:
an information recording unit, adapted to record processing information for screening of the received message by the function screener, wherein the screening processing information comprises: whether modifications are made, and/or information of screened functions, and/or error information; and
a processing information notifying unit, adapted to send the screening processing information to the service provider side and/or the service requestor side.

21. The system of any of claims 14-19, wherein the function screener further comprises:
a message processing unit, adapted to check whether a message format received by the function screener conforms to requirements and send the message format that conforms to requirements to the central control unit.

22. The system of any of claims 14-19, further comprising:
a service registration server, adapted to store a service directory and provide service information necessary for service function screening to the function screener via the service directory.
